# EUROPÄISCHE PATENTSCHRIFT

(11) **EP 3 564 182 B1**
(45) Veröffentlichungstag und Bekanntmachung des Hinweises auf die Patenterteilung: **17.03.2021**
(21) Anmeldenummer: 19171302.3
(22) Anmeldetag: 26.04.2019
(51) Int. Cl.: B66C 23/78, E04G 21/04, B60S 9/02

(54) **AUTOBETONPUMPE**
AUTOMATIC CONCRETE PUMP
POMPE À BÉTON AUTOMATIQUE

(30) Priorität: 30.04.2018 DE 102018110391
(43) Veröffentlichungstag der Anmeldung: 06.11.2019
(73) Patentinhaber: Liebherr-Mischtechnik GmbH, 88427 Bad Schussenried (DE)
(72) Erfinder: Haberkorn, Rainer, 89278 Nersingen (DE); Winter, Franz, 89284 Pfaffenhofen (DE)
(74) Vertreter: Laufhütte, Dieter

(56) Entgegenhaltungen:
- EP-A1- 1 908 723
- WO-A1-99/67482
- DE-A1- 19 531 697

## Beschreibung

Die Erfindung betrifft eine Autobetonpumpe mit wenigstens einem vorderen und wenigstens einem hinteren Schwenkbein, wobei die Schwenkbeine mit einem Unterbau der Autobetonpumpe über einen oberen und einen unteren Schwenkbolzenteil mit gemeinsamer Schwenkachse gekoppelt sind.

Aus dem Stand der Technik für Autobetonpumpen ist bekannt, dass Bauteile des hinteren und des vorderen Schwenkbeins sowie des vorderen Teleskopbeins einander überlappende und ineinander greifende Abschnitte aufweisen. Die genannten Komponenten müssen hierzu in gestaffelter Bauhöhe gestaltet beziehungsweise angeordnet werden. Dabei werden üblicherweise das hintere Schwenkbein, das vordere Schwenkbein und das vordere Teleskopbein in dieser Reihenfolge höhenversetzt untereinander angeordnet. Beispielsweise ist in der WO 99/67482 A1 eine Autobetonpumpe mit den Merkmalen des Oberbegriffs des Anspruchs 1 gezeigt.

Im Wesentlichen dient diese Staffelung der Bauhöhe bzw. der einzelnen Komponenten dem Zweck, das hintere und vordere Schwenkbein mittels der beiden Schwenkbolzenteile überhaupt an die gemeinsame Schwenkachse anschließen zu können, während das vordere Teleskopbein diese durchdringt. Der geteilte Schwenkbolzen umfasst dabei üblicherweise zwei voneinander getrennte Bolzen beziehungsweise Bolzenteile, die koaxial und höhenversetzt zueinander angeordnet sind.

Um die zum sicheren Stand der Maschine im Betrieb notwendige Beinlänge zu erreichen ist es dabei notwendig, das vordere Schwenkbein in der Weise teleskopierbar zu gestalten, dass das Teleskopbein im einteleskopierten und eingeschwenkten Zustand das vordere Schwenkbein nach hinten überragt und durch die Schwenkachse in den Bauraum des hinteren Schwenkbeins eindringt. Das Überlappen und Ineinandergreifen der Bauteile entsprechender Unterbauten bedingt, dass das hintere Schwenkbein, das vordere Schwenkbein und das vordere Teleskopbein in ihrer Bauhöhe gestaffelt gestaltet werden, üblicherweise in der oben genannten Reihenfolge. Im Wesentlichen dient die Staffelung der Bauhöhe dem Zweck, das hintere und vordere Schwenkbein mittels eines geteilten Schwenkbolzens überhaupt an die Schwenkachse anschließen zu können, während das vordere Teleskopbein diese durchdringt.

Da auf die Abstützbeine einer mobilen Autobetonpumpe mit Verteilermast vorwiegend Vertikallasten einwirken, bedeutet die oben beschriebene Bauhöhenstaffelung der Schwenkbeine und des Teleskopbeins zwangsläufig eine Verschlechterung bzw. Verringerung der Bauteilabmaße in Belastungsrichtung. Bei gängigen Unterbauten von Autobetonpumpen wie beispielsweise sogenannten XXT-Unterbauten, das heißt Unterbauten, bei denen ein vorderes und ein hinteres Schwenkbein auf einem gemeinsamen, geteilten Schwenkbolzen angelenkt sind, müssen besonders die vorderen Beinteile der Belastung wegen eigentlich möglichst hoch und schmal ausgeführt werden, um die von ihnen aufgenommenen Belastungen sicher aufnehmen zu können. Diese hohe Ausführung der Beinteile ist aber durch die verfügbare Bauhöhe beziehungsweise die Höhe des verfügbaren Bauraums begrenzt. Als Folge sind die Bauteile aufgrund dieser Begrenzung bzw. der entsprechenden Lagerbedingungen an der Schwenkachse viel schwerer und damit unwirtschaftlicher als sie eigentlich sein müssten.

Vor diesem Hintergrund ist es Aufgabe der Erfindung eine verbesserte Autobetonpumpe bereitzustellen, bei der die Schwenkbeine besser an die von ihnen übertragenen Belastungen angepasst sind. Dabei sollen die vorderen und hinteren Schwenkbeine der Autobetonpumpe auf einem gemeinsamen Schwenkachse so gelagert sein, dass der Kraftfluss vom Verteilermast in die Stützbeine möglichst direkt und auf kleinstem Raum abgeleitet wird.

Die Aufgabe wird erfindungsgemäß durch eine Autobetonpumpe mit den Merkmalen des Anspruchs 1 gelöst. Vorteilhafte Ausgestaltungen sind Gegenstand der Unteransprüche.

Demnach ist eine Autobetonpumpe mit wenigstens einem vorderen und wenigstens einem hinteren Schwenkbein vorgesehen, wobei die Schwenkbeine mit einem Unterbau der Autobetonpumpe über einen oberen und einen unteren Schwenkbolzenteil mit gemeinsamer Schwenkachse gekoppelt sind. Wenigstens eines der Schwenkbeine kann ein Teleskopbein umfassen oder mit einem Teleskopbein gekoppelt sein.

Erfindungsgemäß ist vorgesehen, dass die Schwenkbeine mit dem oberen Schwenkbolzenteil über jeweils eine den oberen Schwenkbolzenteil nicht vollumfänglich umgreifende Anlagefläche gekoppelt sind. Diese Anlagefläche kann beispielsweise teilzylindermantelförmig ausgebildet sein und weist entsprechend einen teilkreisähnlichen Querschnitt auf, beziehungsweise ist aus einem Teilzylinderabschnitt beziehungsweise teilzylinderförmigen Abschnitt gefertigt. Damit ist der obere Schwenkbolzenteil im Unterschied zum Stand der Technik nicht über ringförmig ausgebildete Anlageflächen mit den Schwenkbeinen gekoppelt, die den oberen Schwenkbolzenteil vollumfänglich umgreifen. Vielmehr umgreift die erfindungsgemäß vorgesehene Anlagefläche den oberen Schwenkbolzenteil nur teilweise und nicht vollumfänglich.

Erfindungsgemäß sind damit die vorwiegende Belastungsrichtung der Stützbeine mobiler Betonpumpe und der übliche Schwenkwinkel der vorderen und hinteren Schwenkbeine der Unterbauten in einer Weise genutzt, die eine bauhöhentechnisch vorteilhaftere Schwenkbeinanlenkung ermöglicht.

Da die Stützbeine aller mobilen Betonpumpen vorwiegend den Gravitationskräften auf die Maschine im Betrieb trotzen, wirken in den zugehörigen Abstützzylindern Gegenkräfte von unten nach oben. Die Stützbeine einer mobilen Betonpumpe verhalten sich dabei wie ein an der Schwenkachse eingespannter Kragträger, auf dessen Ende die Abstützkraft entgegen der Erdanziehung einwirkt.

Folglich ist die Unterseite eines solchen Stützbeins vorwiegend zugbelastet, die Oberseite auf Druck. Während heutige Schwenkbeine und insbesondere XXT-Unterbauten den die Schwenkachse bildenden geteilten Schwenkbolzen oben und unten ringförmig umschließen, sieht die Erfindung im Druckbereich also im Bereich des oberen Schwenkbolzenteils der Schwenkbeinanlenkung nun lediglich eine teilkreisförmige beziehungsweise teilzylindermantelförmige Anlagefläche vor, während gemäß dem Stand der Technik ein den Schwenkbolzenteil gänzlich bzw. vollumfänglich umschließender Ring vorliegt.

Da die Schwenkwinkel des vorderen Schwenkbeins sich nicht mit denen des hinteren Schwenkbeins überlappen müssen, macht es dieser Ansatz im Druckbereich der beiden Beine möglich, die obere Schwenkbolzenanlenkung statt höhenversetzt auf derselben Höhe auszuführen. Der dadurch erzielte Zugewinn an zur Verfügung stehender Bauhöhe kann zur belastungsgerechten Dimensionierung üblicherweise des vorderen Schwenkbeins und des darin laufenden Teleskopbeins genutzt werden. Damit die so gestalten Beine etwa in Fahrbetrieb nicht herunterfallen braucht es lediglich einer sehr kleine, nicht auslegerelevanten Sicherung. Es ist allerdings dennoch möglich, die obere Schwenkbolzenanlenkung höhenversetzt auszuführen.

In einer bevorzugten Ausführung der Erfindung ist denkbar, dass die oberen Anlageflächen der beiden Schwenkbeine gleich hoch und/oder in gleicher Höhe ausgebildet sind. Bei einer gleich hohen Ausführung der Anlageflächen können entsprechend gleich starke Bleche oder sonstige gleiche Komponenten zur Herstellung der Anlageflächen genutzt werden. Da die Anlageflächen ferner in gleicher Höhe beziehungsweise Bauhöhe der Autobetonpumpe angeordnet sein können ist es möglich, den maximalen vertikalen Bauraum zur Ausführung der mit den Anlageflächen verbundenen Schwenkbeine zu nutzen.

In einer weiteren bevorzugten Ausführung ist denkbar, dass die den Anlageflächen benachbarten Schwenkbolzenanlenkungen der Schwenkbeine gleich hoch und/oder in gleicher Höhe wie die Anlageflächen ausgebildet sind. Die Schwenkbolzenanlenkungen können dabei Teile von Obergurten oder oberen Abschnitten der Schwenkbeine sein, und können alternativ oder zusätzlich einstückig mit den Anlageflächen ausgebildet sein.

In einer weiteren bevorzugten Ausführung ist denkbar, dass die Anlageflächen und/oder die Schwenkbolzenanlenkungen nach Anspruch 3 in gleicher Höhe angeordnet sind, wie ein Anschluss des Unterbaus. Dabei können die genannten Abschnitte beziehungsweise Komponenten alle oder zum Teil wenigstens teilweise in vertikaler Richtung bzw. in Höhenrichtung überlappen. Der Anschluss des Unterbaus kann derjenige Teil des Unterbaus sein, der mit dem Schwenkbolzen mittelbar oder unmittelbar gekoppelt ist.

In einer weiteren bevorzugten Ausführung ist denkbar, dass eine Sicherung vorgesehen ist, die dazu eingerichtet ist, die Schwenkbeine in einer Fahrstellung, in welcher die Schwenkbeine die Autobetonpumpe nicht gegen den Untergrund abstützen, an der Autobetonpumpe zu fixieren.

In dem in der Fahrstellung nicht oder wenig belasteten Zustand der Schwenkbeine werden die Schwenkbeine nicht oder zu wenig an die Schwenkbolzen angedrückt, sodass eine entsprechende Sicherung ein wenigstens teilweise Feststellen der Schwenkbeine an der Autobetonpumpe ermöglicht.

In einer weiteren bevorzugten Ausführung ist denkbar, dass die Anlageflächen einem Zylindermantelsektor mit einem Mittelpunktswinkel von zwischen 45° und 90° entsprechen. Selbstverständlich können die Anlageflächen von der Form eines perfekten Zylindermantelsektors abweichen oder mit davon abweichenden Geometrien verbunden sein bzw. dazu benachbart sein, welche Geometrien ebenfalls als Teil der Anlageflächen angesehen werden können.

Die Anlagenflächen können wie oben erwähnt einstückig mit weiteren Komponenten der Schwenkbeine ausgeführt sein und einen entsprechenden Zylindermantelsektor aufweisen beziehungsweise umfassen.

In einer weiteren bevorzugten Ausführung ist denkbar, dass die Anlageflächen an Fasen der jeweiligen Schwenkbeine grenzen. Die Fasen können dabei von oben betrachtet von seitlichen Bereichen der Schwenkbeine zu den Anlageflächen verlaufen. Die Fasen eines Schwenkbeins können dabei asymmetrisch ausgeführt sein, wobei eine innenliegende Fase größer beziehungsweise länger ausgeführt sein kann als eine dieser gegenüberliegende äußere Fase. Der Begriff der Fase ist vorliegend breit zu verstehen und kann jegliche schräg verlaufende Abschnitte der Schwenkbeine umfassen. Die Fasen müssen nicht zwingend vorgesehen sein. Die Schwenkbiene müssen so gestaltet sein, dass sich die beiden Schwenkbereiche des hinteren und des vorderen Schwenkbeins jeweils nicht überlappen.

In einer weiteren bevorzugten Ausführung kann vorgesehen sein, dass die Schwenkbeine den unteren Schwenkbolzenteil jeweils ringförmig umschließen. Hierdurch kann sichergestellt werden, dass Zugbelastungen im unteren Teil der Schwenkbeine über den ringförmigen Abschnitt der Schwenkbeine in die unteren Schwenkbolzenteile übertragen werden.

In einer weiteren bevorzugten Ausführung ist denkbar, dass untere Schwenkbolzenanlenkungen unterschiedlich hoch und/oder in unterschiedlicher Höhe ausgebildet sind. Hierdurch wir das ringförmige Umgreifen der unteren Schwenkbolzenteile und damit die Zugkraftübertragung in diesem Bereich der Konstruktion vereinfacht.

Weitere Einzelheiten und Vorteile der Erfindung sind anhand der in den Figuren dargestellten beispielhaften Ausführungen erläutert. Dabei zeigen:
- Figur 1:: eine schematische Teilansicht der Schwenkbeine einer erfindungsgemäßen Autobetonpumpe;
- Figur 2:: eine schematische Teildraufsicht einer Autobetonpumpe, bei der eine erfindungsgemäße und eine aus dem Stand der Technik bekannte Ausführung kombiniert sind; und
- Figur 3:: eine schematische Teilansicht der Schwenkbeine einer aus dem Stand der Technik bekannten Autobetonpumpe.

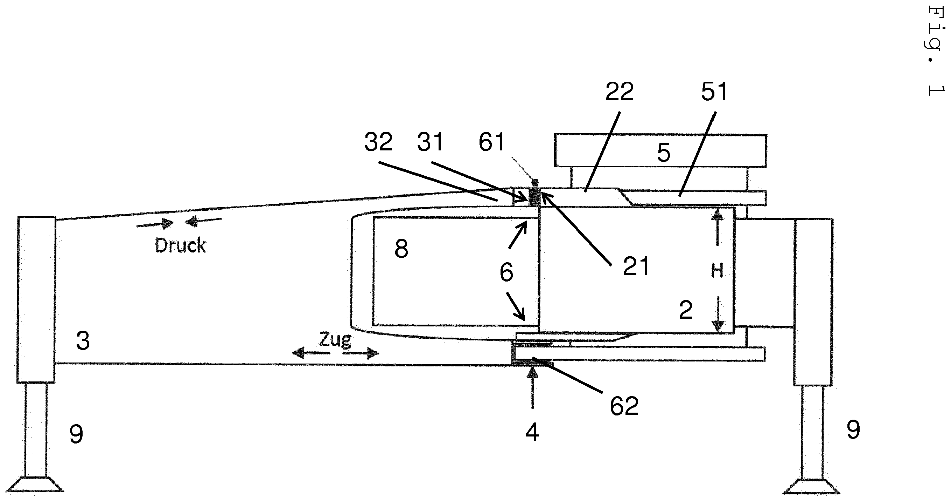

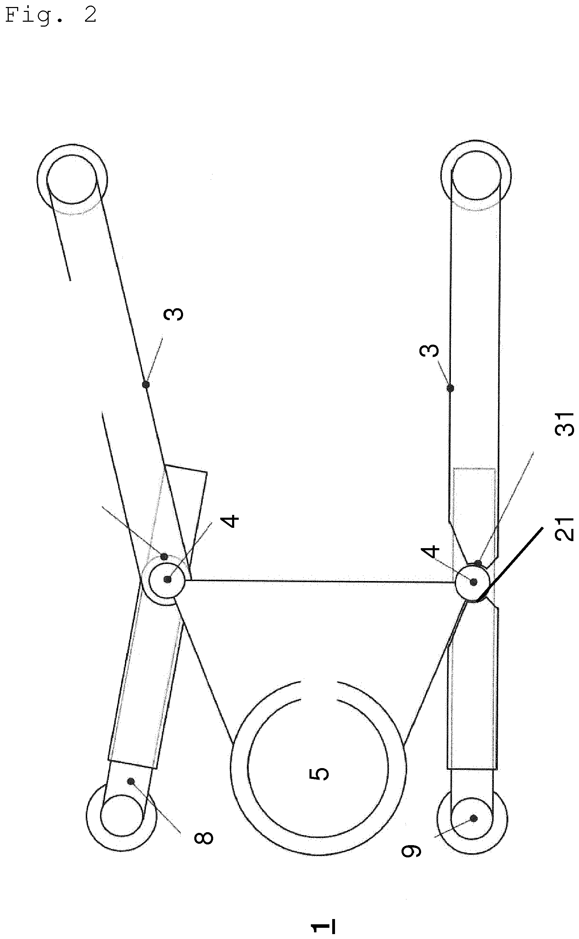

Figur 1 zeigt eine schematische Seitenansicht zweier Schwenkbeine 2, 3 einer in Figur 2 angedeuteten Autobetonpumpe 1, wobei besonderes Augenmerk auf die Anbindung der beiden Schwenkbeine 2 und 3 über eine Schwenkachse 4 an einen Unterbau 5 der Autobetonpumpe 1 gerichtet ist.

Das vordere Schwenkbein 2 und das hintere Schwenkbein 3 sind über die gemeinsame Schwenkachse 4 und deren zweigeteilten Schwenkbolzen 6 schwenkbar mit dem Unterbau 5 gekoppelt. Der zweigeteilte Schwenkbolzen 6 umfasst einen oberen Schwenkbolzenteil 61 und einen unteren Schwenkbolzenteil 62, die koaxial und beabstandet voneinander an dem Unterbau 5 der Autobetonpumpe 1 angeordnet sind. Beide Schwenkbeine 2, 3 verbinden den Unterbau 5 mit Abstützzylindern 9. Unter Belastung wirken im oberen Bereich der Schwenkbeine 2, 3 Druckkräfte, während im unteren Bereich Zugkräfte wirken. Diese sind durch entsprechende Pfeile angezeigt.

Der Unterbau 5 umfasst insbesondere einen Mastbock der Autobetonpumpe 1, an der der Mast der Autobetonpumpe 1 angeordnet ist.

Erfindungsgemäß ist vorgesehen, dass die beiden Schwenkbeine 2, 3 mit dem oberen Schwenkbolzenteil 61 über jeweils eine obere teilzylindermantelförmige Anlagefläche 21, 31 gekoppelt sind. Obschon Figur 1 lediglich zwei Schwenkbeine 2, 3 zeigt, so kann die erfindungsgemäße Autobetonpumpe auch mehr als zwei entsprechende Schwenkbeine 2, 3 umfassen. Üblicherweise kann die Autobetonpumpe 1 dabei vier Schwenkbeine 2, 3 umfassen, von denen jeweils zwei links und zwei rechts bezogen auf die Längsachse der Autobetonpumpe 1 angeordnet sind.

Die linken Schwenkbeine 2, 3 können dabei selbstverständlich über andere Schwenkbolzenteile 61, 62 mit dem Unterbau gekoppelt sein, als die rechten Schwenkbolzenteile 61, 62.

Wie in Figur 1 erkennbar ist, können die oberen Anlageflächen 21, 31 der beiden Schwenkbeine 2, 3 gleich hoch und/oder in gleicher Höhe ausgebildet sein. Die gleiche Höhe bedeutet dabei die gleiche Höhe bezogen auf die vertikale Ausrichtung beziehungsweise auf den Untergrund der Autobetonpumpe 1.

Die den Anlageflächen 21, 31 benachbarten Schwenkbolzenanlenkungen 22, 32, der Schwenkbeine 2, 3 können alternativ oder zusätzlich gleich hoch und/oder in gleicher Höhe ausgebildet sein.

Zusätzlich oder alternativ ist denkbar, dass die Anlageflächen 21, 31 und/oder die Schwenkbolzenanlenkungen 22, 32 in gleicher Höhe und/oder gleich hoch ausgebildet sind, wie ein Anschluss 51 des Unterbaus 5.

Es kann auch eine nicht näher erläuterte Sicherung vorgesehen sein, die dazu eingerichtet ist, die Schwenkbeine 2, 3 in einer Fahrstellung, in welcher die Schwenkbeine 2, 3 die Autobetonpumpe nicht gegen den Untergrund abstützen, an der Autobetonpumpe 1 zu fixieren. Figur 1 zeigt ferner, dass ein Teleskopbein 8 relativ zum vorderen Schwenkbein verschieblich an diesem gelagert sein kann.

Wie dem unteren Bereich der Figur 2 entnehmbar ist, können die erfindungsgemäßen Anlageflächen 21, 31 einem Zylindermantelsektor mit einem Mittelpunktswinkel von 20° bis 180° und insbesondere von 45° bis 90° entsprechen. Dem gegenüber ist im oberen Abschnitt der Figur 2 eine dem Stand der Technik entsprechende Ausführung der Autobetonpumpe 1 gegenübergestellt, bei der erkennbar ist, dass die Schwenkbolzen 6 ringförmig und vollständig von den Schwenkbeinen 2, 3 umschlossen werden.

Dem unteren Abschnitt der Figur 2 ist ferner entnehmbar, dass die Anlageflächen 21, 31 an Fasen der jeweiligen Schwenkbeine 2, 3 grenzen. Die Fasen ermöglichen hierbei das kollisionsfreie Verschwenken der Schwenkbeine 2, 3 gegeneinander in einem von dem Winkel der Fasen bestimmten Winkelbereich. Der Begriff der Fasen ist vorliegend breit auszulegen und kann sich auf jegliche Geometrien beziehen, die das Prinzip des kollisionsfreien Verschwenkens der Schwenkbeine ermöglichen. Selbstverständlich können auch weitere Abschnitte die Schwenkbeine 2, 3 so gestaltet bzw. ausgebildet sein, dass ihr möglichst kollisionsfreies Verschwenken gewährleistet ist.

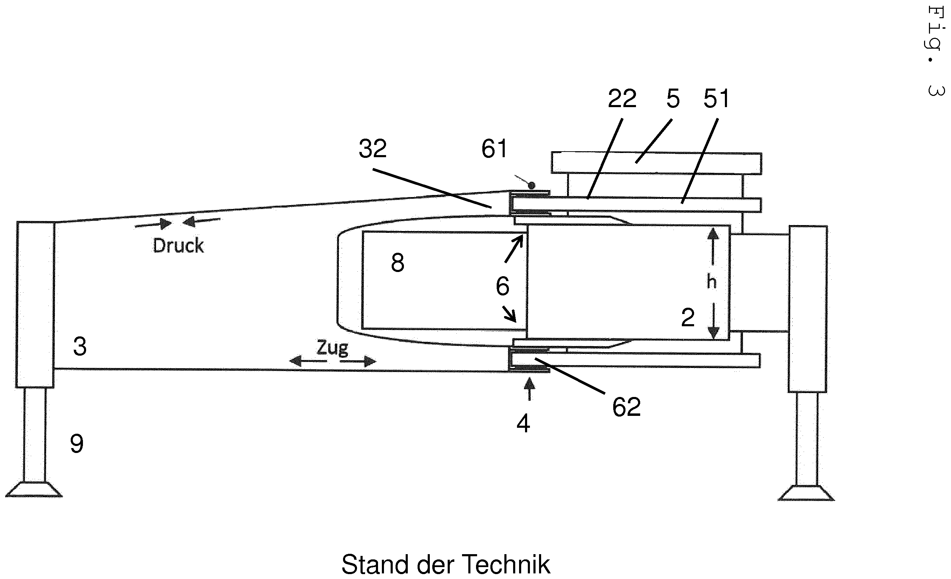

Figur 3 zeigt eine Seitenansicht einer aus dem Stand der Technik bekannten Autobetonpumpe, wobei verglichen mit der in Figur 1 gezeigten erfindungsgemäßen Ausführung erkennbar ist, dass aufgrund der gestaffelten Anordnung der Komponenten im Bereich des oberen Schwenkbolzenteils 61 das vordere Schwenkbein 2 und das darin geführte Teleskopbein 8 eine geringere Höhe h aufweisen als die Höhe H der erfindungsgemäßen Autobetonpumpe 1 aus Figur 1.

Wie sich aus dem Vergleich der Figuren 1 und 3 ergibt ist die Bauhöhe h, welche gemäß dem in Figur 3 gezeigten Stand der Technik für das vordere Schwenkbein 2 zur Verfügung steht geringer als die Bauhöhe H, welche gemäß Figur 1 für das vordere Schwenkbein 2 zu Verfügung steht. Hierdurch kann das vordere Schwenkbein 2 erfindungsgemäß in Belastungsrichtung biegesteifer und leichter ausgeführt sein, als dies gemäß dem Stand der Technik der Fall ist.

## Patentansprüche

1. Autobetonpumpe (1) mit wenigstens einem vorderen und wenigstens einem hinteren Schwenkbein (2, 3), wobei die Schwenkbeine (2, 3) mit einem Unterbau (5) der Autobetonpumpe (1) über einen oberen und einen unteren Schwenkbolzenteil (61, 62) mit gemeinsamer Schwenkachse (4) gekoppelt sind,
**dadurch gekennzeichnet,**
**dass** die Schwenkbeine (2, 3) mit dem oberen Schwenkbolzenteil (61) über jeweils eine den oberen Schwenkbolzenteil (61) nicht vollumfänglich umgreifende, insbesondere teilzylindermantelförmige, obere Anlagefläche (21, 31) gekoppelt sind.

2. Autobetonpumpe (1) nach Anspruch 1, **dadurch gekennzeichnet, dass** die oberen Anlageflächen (21, 31) der beiden Schwenkbeine (2, 3) gleich hoch und/oder in gleicher Höhe wie die Anlageflächen ausgebildet sind.

3. Autobetonpumpe (1) nach Anspruch 1 oder 2, **dadurch gekennzeichnet, dass** die den Anlageflächen (21, 31) benachbarten Schwenkbolzenanlenkungen (22, 23) der Schwenkbeine (2, 3) gleich hoch und/oder in gleicher Höhe ausgebildet sind.

4. Autobetonpumpe (1) nach einem der vorhergehenden Ansprüche, **dadurch gekennzeichnet, dass** die Anlageflächen (21, 31) und/oder die Schwenkbolzenanlenkungen (22, 23) nach Anspruch 3 in gleicher Höhe angeordnet sind, wie ein Anschluss (51) des Unterbaus (5).

5. Autobetonpumpe (1) nach einem der vorhergehenden Ansprüche, **dadurch gekennzeichnet, dass** eine Sicherung vorgesehen ist, die dazu eingerichtet ist, die Schwenkbeine (2, 3) in einer Fahrstellung, in welcher die Schwenkbeine (2, 3) die Autobetonpumpe (1) nicht gegen den Untergrund abstützen, an der Autobetonpumpe (1) zu fixieren.

6. Autobetonpumpe (1) nach einem der vorhergehenden Ansprüche, **dadurch gekennzeichnet, dass** die Anlageflächen (21, 31) einem Zylindermantelsektor mit einem Mittelpunktswinkel von zwischen 20° und 180°, insbesondere von zwischen 45° und 90° entsprechen.

7. Autobetonpumpe (1) nach einem der vorhergehenden Ansprüche, **dadurch gekennzeichnet, dass** die Anlageflächen (21, 31) an Fasen der jeweiligen Schwenkbeine (2, 3) grenzen.

8. Autobetonpumpe (1) nach einem der vorhergehenden Ansprüche, **dadurch gekennzeichnet, dass** die Schwenkbeine (2, 3) den unteren Schwenkbolzenteil (62) jeweils ringförmig umschließen.

9. Autobetonpumpe (1) nach einem der vorhergehenden Ansprüche, **dadurch gekennzeichnet, dass** untere Schwenkbolzenanlenkungen (22', 23') unterschiedlich hoch und/oder in unterschiedlicher Höhe ausgebildet sind.

## Claims

1. Automatic concrete pump (1) with at least one front and at least one rear pivot leg (2, 3), wherein the pivot legs (2, 3) are coupled to a substructure (5) of the automatic concrete pump (1) via an upper and a lower pivot pin part (61, 62) with a common pivot axis (4),
**characterised in that**
the pivot legs (2, 3) are coupled to the upper pivot pin part (61) respectively via an upper contact surface (21, 31), in particular in the form of a partial cylinder jacket, which does not fully encompass the upper pivot pin part (61).

2. Automatic concrete pump (1) according to claim 1, **characterised in that** the upper contact surfaces (21, 31) of the two pivot legs (2, 3) are the same height and/or are formed at the same height as the contact surfaces.

3. Automatic concrete pump (1) according to claim 1 or 2, **characterised in that** the pivot pin linkages (22, 23) of the pivot legs (2, 3) adjacent to the contact surfaces (21, 31) are the same height and/or are formed at the same height.

4. Automatic concrete pump (1) according to any one of the preceding claims, **characterised in that** the contact surfaces (21, 31) and/or the pivot pin linkages (22, 23) according to claim 3 are arranged at the same height as a connection (51) of the substructure (5).

5. Automatic concrete pump (1) according to any one of the preceding claims, **characterised in that** a securing means is provided, which is configured to fix the pivot legs (2, 3) on the automatic concrete pump (1) in a driving position, in which the pivot legs (2, 3) do not brace the automatic concrete pump (1) against the ground.

6. Automatic concrete pump (1) according to any one of the preceding claims, **characterised in that** the contact surfaces (21, 31) correspond to a cylinder jacket sector with a centre angle of between 20° and 180°, in particular of between 45° and 90°.

7. Automatic concrete pump (1) according to any one of the preceding claims, **characterised in that** the contact surfaces (21, 31) border on bevels of the respective pivot legs (2, 3).

8. Automatic concrete pump (1) according to any one of the preceding claims, **characterised in that** the pivot legs (2, 3) enclose the lower pivot pin part (62) respectively in the form of a ring.

9. Automatic concrete pump (1) according to any one of the preceding claims, **characterised in that** lower pivot pin linkages (22', 23') are of different height and/or formed at different height.

## Revendications

1. Pompe à béton automatique (1) avec au moins une béquille pivotante avant et au moins une béquille pivotante arrière (2, 3), dans laquelle les béquilles pivotantes (2, 3) sont couplées à une sous-structure (5) de la pompe à béton automatique (1) par l'intermédiaire d'une partie de boulon pivotant supérieure et d'une partie de boulon pivotant inférieure (61, 62) avec un axe de pivotement commun (4),
**caractérisée en ce que**
les béquilles pivotantes (2, 3) sont couplées à la partie de boulon pivotant supérieure (61) par l'intermédiaire de respectivement une surface d'appui supérieure (21, 31), en particulier en forme d'enveloppe partiellement cylindrique, n'entourant pas totalement la partie de boulon pivotant supérieure (61).

2. Pompe à béton automatique (1) selon la revendication 1, **caractérisée en ce que** les surfaces d'appui supérieures (21, 31) des deux béquilles pivotantes (2, 3) sont réalisées avec une hauteur identique et/ou à une hauteur identique à celle des surfaces d'appui.

3. Pompe à béton automatique (1) selon la revendication 1 ou 2, **caractérisée en ce que** les articulations de boulon pivotant (22, 23), adjacentes aux surfaces d'appui (21, 31), des béquilles pivotantes (2, 3) sont réalisées avec une hauteur identique et/ou à une hauteur identique.

4. Pompe à béton automatique (1) selon l'une quelconque des revendications précédentes, **caractérisée en ce que** les surfaces d'appui (21, 31) et/ou les articulations de boulon pivotant (22, 23) selon la revendication 3 sont disposées à une hauteur identique à celle d'un raccordement (51) de la sous-structure (5).

5. Pompe à béton automatique (1) selon l'une quelconque des revendications précédentes, **caractérisée en ce qu'**est prévu un système de blocage qui est mis au point pour fixer au niveau de la pompe à béton automatique (1) les béquilles pivotantes (2, 3) dans une position de déplacement, dans laquelle les béquilles pivotantes (2, 3) ne soutiennent pas contre le sol la pompe à béton automatique (1).

6. Pompe à béton automatique (1) selon l'une quelconque des revendications précédentes, **caractérisée en ce que** les surfaces d'appui (21, 31) correspondent à un secteur d'enveloppe cylindrique avec un angle de point central entre 20° et 180°, en particulier entre 45° et 90°.

7. Pompe à béton automatique (1) selon l'une quelconque des revendications précédentes, **caractérisée en ce que** les surfaces d'appui (21, 31) jouxtent des chanfreins des béquilles pivotantes (2, 3) respectives.

8. Pompe à béton automatique (1) selon l'une quelconque des revendications précédentes, **caractérisée en ce que** les béquilles pivotantes (2, 3) entourent respectivement en forme d'anneau la partie de boulon pivotant inférieure (62).

9. Pompe à béton automatique (1) selon l'une quelconque des revendications précédentes, **caractérisée en ce que** des articulations de boulon pivotant inférieures (22', 23') sont réalisées avec une hauteur différente et/ou à une hauteur différente.
